# EUROPEAN PATENT APPLICATION

(11) **EP 1 849 824 A1**
(43) Date of publication of application: **31.10.2007**
(21) Application number: 06008692.3
(22) Date of filing: 26.04.2006
(51) Int. Cl.: C08K 5/09, H01B 3/44

(54) **Polymer composition with improved ageing resistance**

(71) Applicant: Borealis Technology Oy, 06101 Porvoo (FI)
(72) Inventor: Nylander, Perry, 412 61, Göteborg (SE)
(74) Representative: Kador & Partner

(57) **Abstract**

The present invention relates to a polymer composition having improved ageing and scorch properties comprising a polyolefin, a substituted or unsubstituted carboxylic acid anhydride and an antioxidant. Furthermore the polymer composition of the present invention is used in a layered device, in particular an electric power cable.

## Description

The present invention relates to a polymer composition, in particular to a semiconductive polymer composition, having improved ageing and scorch properties to a layered device, especially an electric power cable, comprising such a polymer composition. In another aspect, the present invention relates to an insulating polymer composition comprising the polymer composition and having improved scorch performance.

Electric power cables, in particular for medium voltage (≥ 6 kV to < 36 kV) and high voltage (≥ 36 kV), usually comprise a conductive cable core surrounded by an inner semiconductive layer, an insulation layer, an outer semiconductive layer and, optionally, further barrier layers and a cable jacket. Today, the insulation and semiconductive layers are usually made from polymers, in particular polyolefins. Predominantly, ethylene homo- and/or copolymers are used which are usually crosslinked, e.g. by adding peroxide to the composition before extrusion.

Service life of power cables is limited by ageing phenomena of the polymeric materials on which the semiconductive and insulating layers are based. However, ageing processes can differ in the underlying mechanism.

Degradation of the polymeric material can result from thermal ageing which is mainly based on oxidative degradation steps.

In case the polymeric composition is in contact with metallic material, thermo-oxidative ageing can even be enhanced (so-called metall-activated ageing).

Besides the degradation phenomena mentioned above, there is still another ageing process which is relevant for power cables installed in an environment where the cable is exposed to water, e.g. in underground or high humidity locations. The reduced service life has been attributed to the formation of dendritically branched defects, so called water trees, which occur when an organic polymer material is subjected to an electric field over an extended period of time in the presence of water.

Water tree structures comprise so called "bow-tie trees" and "vented trees" which can develop in the presence of water and an electric field. Normally, bow-tie trees are initiated at contaminants present within the insulating layer while vented trees are initiated at particles or protrusions at the interface between the semiconductive and the insulating layer. The growth of vented trees is additionally promoted by the presence of sulfur in the semiconductive layer. The increased field strength or a weakened insulation at the tip of the water tree may initiate electric treeing leading to an electric breakdown of the insulating system. The extensive work on the water tree phenomenon has resulted in improvements in design, manufacture, materials, testing and qualification; these have reduced the impact of water treeing in modern cable systems. To characterize the resistance of cables to electric degradation due to water treeing, tests have been developed and are widely used in the industry to type test new cable constructions and monitor the quality of regular production.

Within the extensive research work, it has been reported that occasionally vented trees can initiate from an apparently undisturbed semicon/insulation interface. This has been explained as resulting from the presence of porous-like structures in the semiconductive layer which can initiate large vented trees.

These defect structures are believed to be generated via an electrochemical reaction between a metallic material and the semiconductive material under the influence of mechanical stress in the presence of an electrolyte. This involves the inner semiconductive layer in contact with a metallic conductor or the outer semiconductive layer in contact with e.g. metallic wires leading fault currents.

Clearly, during the service life of a medium or high voltage cable, these defect structures may be generated under the influence of electric and mechanical stress in the presence of water. They continue to grow and, when reaching the semicon/insulation interface, may initiate vented trees. This ageing mechanism is referred to as "stress induced electrochemical degradation" (SIED) and the resulting defect structures have been designated as "SIED structures", "ion tracks" or "black trees".

An increased number of vented trees due to SIED can lead to an increased probability of electric failure of the cable. In order to ensure reliable performance of the cable at a given electric stress, the insulation layer thickness is adjusted according to the probability of electric failure.

To improve resistance to oxidative ageing, antioxidants are normally added to the polymeric compositions. However, as explained above, further degradation processes exist (metall-activated ageing and stress-induced electrochemical ageing) which also need to be minimized. In particular, additives should not improve a specific ageing property on the expense of other ageing properties. On the contrary, all ageing phenomena should be equally improved by the additives.

As explained above, insulating and semiconductive layers are preferably made of crosslinked polyethylene wherein crosslinking is initiated in a vulcanizing tube by crosslinking agents such as peroxides. However, if a significant amount of peroxides already decomposes, or mechanical generated radicals, in the extruder, thereby initiating premature crosslinking, this will result in so-called "scorch", i.e. formation of inhomogeneity, gel-like areas or surface uneveness of the extruded polymer. Formation of scorch is a problem affecting the quality of semiconductive as well as insulating cable layers.

To suppress the formation of scorch as much as possible, the amount of peroxide needed to sufficiently crosslink the semiconductive material is preferably reduced. However, with too low amounts of peroxide, the degree of crosslinking might be too low for sufficiently improving thermal and mechanical properties. Thus, to improve the cable production process it is desired to reduce the scorch formation without adversely affecting the crosslinking degree. This can be achieved by so-called scorch-retarding additives.

Considering the comments made above, it is one object of the present invention to provide a semiconductive polymer composition having improved ageing and scorch properties which means that at least one of these properties is improved while keeping the other property on a high level. It is also an object of the present invention to provide an insulating polymer composition having improved scorch performance.

According to the aspects of the present invention, the objects are solved by providing a polymer composition, comprising
- a polyolefin,
- a substituted or unsubstituted carboxylic acid anhydride, and
- an antioxidant.

In the present invention, it is preferred that the substituted or unsubstituted carboxylic acid anhydrid constitutes a ring including 3 to 7 carbon atoms, more preferred 4 carbon atoms, and one oxygen.

Furthermore, the substituted or unsubstituted acid anhydrid is preferably a substituted or unsubstituted phathalic acid anhydrid.

Moreover, one preferred embodiment of the present invention is that the polymer composition is a semiconductive polymer composition which additionally comprises carbon black.

The polyolefin of the present invention may be an olefin homo- or copolymer. Preferably, it is either an ethylene homo- or copolymer or a propylene homo- or copolymer. Most preferably, it is an ethylene homo- or copolymer.

Preferably, the polyolefin has a density of less than 0.935 g/cm³.

If the polyolefin is an ethylene copolymer, the comonomers can be selected from C₃₋₂₀, more preferably C₃₋₁₀ alpha-olefins such as propylene, 1-butene, 1-hexene and 1-nonene, polar comonomers such as acrylic acid, methacrylic acid, acrylates, methacrylates or acetates.

As an example, the polyolefin may contain polar comonomer units in an amount of 1 to 50 wt%, 2 to 35wt%, 3 to 25 wt% or 5 to 20 wt% of the total polyolefin.

Still more preferably, the polar polyolefin is a copolymer of ethylene with C₁₋₄ acrylates, such as methyl, ethyl, propyl or butyl acrylates, or vinyl acetate. Preferably, the polyolefin has a melt flow rate MFR₂ (2.16 kg/190 °C) of 0.1 to 50 g/10min, more preferably 0.3 to 20 g/10min, even more preferably 1.0 to 15 g/10min, and most preferably 2.0 to 10 g/10min.

The polyolefin can be produced by any conventional polymerization process. Preferably, it is produced by radical polymerization such as high pressure radical polymerization. High pressure polymerization can be effected in a tubular reactor or an autoclave reactor. Preferably, it is a tubular reactor. In general, the pressure can be within a range of 1200 to 3500 bars and the temperature can be within a range of 150°C to 350°C. However, the polyolefin can also be prepared by other types of polymerization, such as coordination polymerization, e.g. in a low pressure process, with Ziegler-Natta, chromium, single site/dual site, metallocene (for example transition metals), non-metallocene (for example late transition metals) catalysts. The transition and late transition metal compounds are found in groups 3-10 of the Periodic Table (IUPAC 1989). These catalysts can be used in the supported and non-supported mode, i.e. with and without carrier.

According to a further essential feature of the present invention, the polymer composition comprises a substituted or unsubstituted phthalic acid anhydride. It is preferred that the phathalic acid anhydrid is unsubstituted.

The substituted phthalic acid anhydride may have one or more substituents selected from alkyl radicals, or alkylradicals containing or connected by one or more heteroatoms, carboxylic groups, cyclic aliphatic or aromatic hydrocarbon radicals. More preferably, the substituted phthalic acid anhydride is selected from alkylated phtalic acids with one or more C₁ or higher alkyltails, preferably C₁ to C₂₈ and more preferably C₂ to C₂₂, e.g. 1,4-di-C₁₋₄-alkyl phthalic acid anhydride. The aromatic acid anhydrides may also be selected from higher aromats like naphtalenic acide anhydride or their like.

In a preferred embodiment, the substituted or unsubstituted phthalic acid anhydride is present in an amount of 0.01 to 2 wt%, more preferably 0.02 to 1 wt%, even more preferably 0.03 to 0.5 wt%, and most preferably 0.05 to 0.35 wt%, based on the weight of the polymer composition.

The polymer composition further comprises an antioxidant.

Preferably, the antioxidant is selected from the group of diphenyl amines and diphenyl sulfides. The phenyl substituents of these compounds may be substituted with further groups such as alkyl, alkylaryl, arylalkyl or hydroxy groups.

Preferably, the phenyl groups of diphenyl amines and diphenyl sulfides are substituted with tert.-butyl groups, preferably in meta or para position, which may bear further substituents such as phenyl groups.

As an antioxidant sterically hindered or semi-hindered phenols, aromatic amines, aliphatic sterically hindered amines, organic phosphates, thio compounds, or polymerized 2,2,4-trimethyl-l,2-dihydroquinoline can be mentioned like 4,4'-bis(1,1'-dimethylbenzyl)diphenylamine, butylated reaction product of p-cresol dicyclopentadiene , 1, 4,6-bis (octylthiomethyl)-o-cresol, 6,6'-di-tert. butyl-2,2'-thiodi-p-cresol, 3,5-di-tert. butyl-4-hydroxyhydrocinnamic acid triester with 1,3,5-tris (2-hydroxyethyl)-s-triazine-2,4,6(1H,3H,5H)-trione, 1,3,5-Tris(4-tert. butyl-3-hydroxy-2,6-dimethylbenzyl)-1,3,5-triazine-2,4,6-(1H,3H,5H)-trione, 2,5,7,8-Tetramethyl-2(4',8',12'-trimethyltridecyl)chroma-6-ol, 2,2'-methylene-bis(6-(1-methylcyclohexyl)para-cresol), 4,4'-Thiobis (2-tert. butyl-5-methylphenol), Bis-(3,3-bis-(4-'-hydroxy-3'-tert. butylphenyl) butanic acid)-glycolester, 2,2'-thiodiethylenebis-(3,5-di-tert. butyl-4-hydroxyphenyl)-propionate, 1,3,5-trimethyl-2,4,6-tris-(3,5-di-tert. butyl-4-hydroxyphenyl) benzene, Octadecyl 3-(3',5'-di-tert. butyl-4-hydroxyphenyl)propionate, Pentaerythrityl-tetrakis(3-(3',5'-di-tert. butyl-4-hydroxyphenyl)-propionate, Di-stearyl-thio-di-propionate, Di-palmityl/stearyl-thio-di-propionate, Di-lauryl-thio-di-propionate, Di-tridecyl-thio-di-propionate, Di-myristyl-thio-di-propionate, Di-octadecyl-disulphide, p'- Dioctyldiphenylamine, Di-t- butyl hydroquinone, 2,5- Di-(t- amyl) hydroquinone, Bis-(2,2,6,6-tetramethyl-4-piperidyl)-sebacate, 2,2,4,4-Tetramethyl-7-oxa-3,20-diaza-dispiro(5.1.11.2)-heneicosane -21-on, Poly((6-((1,1,3,3-tetramethylbutyl)amino)-1,3,5-triazine-2,4-diyl) (2,2,6,6-tetramethyl-4-piperidyl)imino)-1,6-hexanediyl ((2,2,6,6-tetramethyl-4-piperidyl)imino)), 1,3,5-Triazine-2,4,6-triamine, N,N"'-(1,2-ethane-diylbis (((4,6-bis(butyl (1,2,2,6,6-pentamethyl-4-piperidinyl)amino)-1,3,5-triazine-2-yl) imino)-3,1-propanediyl))-bis-(N',N"-dibutyl-N',N"-bis-(1,2,2,6,6-pentamethyl-4-piperidinyl), reaction products of N,N'-ethane-1,2-diylbis(1,3-propanediamine), cyclohexane, peroxidized 4-butylamino-2,2,6,6-tetramethyl piperidine and 2,4,6-trichloro-1,3,5-triazine.

Of course, not only one of the above described antioxidants may be used but also any mixture thereof.

Preferably, the antioxidant or mixture of two or more antioxidants is present in an amount of .0.05 to 5 wt%, more preferably 0.1 to 2.5 wt%, even more preferably 0.15 to 1.5 wt%, and most preferably 0.25 to 1.3 wt%, based on the weight of the polymer composition.

In a preferred embodiment, unsubstituted phthalic acid anhydride is used in combination with a substituted or unsubstituted diphenyl sulfide antioxidant.

The semiconductive polymer composition of the present invention further comprises carbon black.

The semiconductive properties result from the carbon black added to the polyolefin. Thus, the amount of carbon black is at least such that a semiconductive composition is obtained. Depending on the desired use and conductivity of the composition, the amount of carbon black can vary. Preferably, the polymer composition comprises 15 to 50 wt% carbon black, based on the weight of the semiconductive polymer composition. In other preferred embodiments, the amount of carbon black is 10-45 wt%, 20-45 wt%, 30-45 wt% or 36-41 wt%, based on the weight of the semiconductive polymer composition.

Any carbon black can be used which is electrically conductive. Examples of suitable carbon blacks include furnace blacks and acetylene blacks.

Suitable furnace blacks may have a primary particle size of less than 29 nm, measured according to ASTM D-3849. Many suitable furnace blacks of this category are characterized by an iodine number between 60 and 300 mg/g according to ASTM D-1510 and an oil absorption number between 50 and 200 ml/100g.

Suitable furnace blacks may have a primary particle size of greater than 28 nm, measured according to ASTM D-3849. Many suitable furnace blacks of this category are characterized by an iodine number between 30 and 200 mg/g according to ASTM D-1510 and an oil absorption number between 80 and 300 ml/100 g.

Other suitable carbon blacks can be made by any process or can be subjected to additional treatment steps.

Suitable carbon blacks for semiconductive cable layers are preferably characterized by their cleanliness. Therefore, preferred carbon blacks have an ash content of less than 0.2 wt%, measured according to ASTM D-1506, a 325 mesh sieve residue of less than 30 ppm according to ASTM D-1514 and have less than 1 wt% total sulfur according to ASTM-1619.

The thermal and mechanical stability of polymers can be improved by crosslinking. Thus, according to a preferred embodiment, the polymer composition of the present invention is crosslinked. Crosslinking can be effected by a adding a crosslinking agent to the crosslinkable polymer composition.

In the context of the present invention, a crosslinking agent is defined to be any compound which can initiate radical polymerization. A crosslinking agent can be a compound capable of generating radicals when decomposed but also comprises the radicals obtained after decomposition. Preferably, the crosslinking agent contains at least one -O-O- bond or at least one -N=N-bond. More preferably, the crosslinking agent is a peroxide and/or a radical obtained therefrom after thermal decomposition.

The crosslinking agent, e.g. a peroxide, is preferably added in an amount of 0.1 wt% to 4 wt%, more preferably 0.2 wt% to 3 wt%, and even more preferably 0.4 wt% to 2.5 wt%, based on the weight of the polymer composition.

The crosslinking agent can be added to the polymer composition during the compounding step (i.e. e.g. when mixing the polyolefin with carbon black), or after the compounding step in a separate process, or during extrusion of the polymer composition.

The polymer composition may comprise further additives. As possible additives, crosslinking boosters, stabilizers, processing aids, flame retardant additives, acid scavengers, inorganic fillers or voltage stabilizers can be mentioned.

The present invention also relates to a layered device comprising at least one layer made of polymer composition as described above. Preferably, the layer is a semiconductive layer which is adjacent to a metallic material.

Preferably, the layered device is an electric cable, more preferably an electric power cable wherein the metallic conductor core, e.g. copper or aluminum, is surrounded by the semiconductive layer.

According to the present invention, the substituted or unsubstituted acid anhydride, preferably phatalic acid anhydride, may be used as a metal deactivator in a cable made of the inventive composition comprising a polyolefin, the substituted or unsubstituted acid anhydride and an antioxidant.

As indicated above, the polymer composition of the present invention is preferably used for the preparation of the inner semiconductive layer of a power cable which is in contact with the metallic core. However, it may also be used for the preparation of outer semiconductive layers, in particular if these are also in contact with metallic materials, e.g. metallic wires leading fault currents.

According to another aspect of the present invention, the polymer composition is used as an insulation polymer composition , which comprises
- a polyolefin,
- a substituted or unsubstituted phthalic acid anhydride, and
- a substituted or unsubstituted diphenyl sulfide as an antioxidant.

With regard to further details about the polyolefin, the phthalic acid anhydride and the diphenyl sulfide, reference can be made to the comments provided above.

Furthermore, details about optional additives given above are also applicable to the insulating polymer composition.

Preferably, the insulating polymer composition is used to prepare an insulating layer of a power cable or a communication layer.

The invention will now be described in further detail by the examples provided below.

### Examples

### Measuring methods

### 1. Elastograph measurements

Pellets were made from the polymer compositions and plaque were then made from the pellets by preheating at 120 °C for two minutes and compacting at 9.3 MPa for two minutes and than cooling for 2 min. The resulting plaques were then tested in a Göttfert elastograph measuring the changes of the shear modulus of crosslinkable compositions when the peroxide is decomposed and crosslinks the polymer chains at 180 °C. This testing method corresponds to ISO 6502. Thickness of the plate were 5 mm. and the diameter 37 mm.

The time to reach 10 % and 90 %, respectively, of the maximum torque was also measured and provides an indication about crosslinking speed. The instrument is always tempered to 180 °C.

### 2. Scorch testing

Scorch was tested by a rheometric method using a Monsanto Moving Die Rheometer, MDR. The time to reach a torque of 3 Nm and 6 Nm, respectively, at a temperature of 140 °C (i.e. typical extrusion temperature) is monitored. The torque is measured on plaques 3 mm thick and 40 mm diameter made as described in Elastograph measurements.

The more time is needed to reach a certain torque, the higher is the resistance to scorch. In other words, high values indicate that there is a lower tendency for premature crosslinking at typical extrusion temperatures.

### 3. Tensile properties

### 3.1. Ageing without copper contact

Elongation at break was measured in accordance with IEC 60811-1-2 after 0 hours and after ageing for a specified period of time at 135 °C.

### 3.2. Ageing in contact with copper

For the evaluation of ageing properties in contact with copper, sandwich dogbones were aged in a cell oven with controlled air exchange rate at 135 °C. The sandwich was made by pressing two plates. A brush is taken and a specified amount of copper powder is spread onto one plate. The other plate is put on top of it and both plates are pressed together. Dog bones are punched out from the sandwich. For the evaluation of ageing properties in contact with copper, sandwich dog bones were aged in a cell oven with controlled air exchange rate 15 times per hour at 135 °C. The sandwich was made by pressing two plates from tapes made from compound (with crosslinking agent). The tapes were made on a Brabender tape extruder with 1,5 mm slot and temperature setting 115/120/125 °C. The tapes were placed in layers and pressed in a 0,8 mm thick frame for 5 minutes at 120 °C with low pressure followed by 2 kN/cm2 and cooled for 15 min. The tape direction is marked on the plates. A brush is taken and a specified amount of copper powder, 0,5g of copper powder Merck, 1.022703.0250, pro analysis >230 mesh ASTM, on 100 x 100 mm is spread in the tape direction onto one plate which is placed in a 1.5mm frame. The other plate is put on top of it and both plates are pressed together with 2 kN/cm² starting at 120C going up to 200C during 12 min than 28 minutes at 200 °C followed by cooling at 15 °C /min to get 1,5 to 1,8 mm thick sandwich plates. Dog bones, ISO527-2 5A, are punched out from the sandwich in the tape direction and used for tensile testing after conditioning min 16 hours at 23 °C and 50% relative humidity. Test speed 25 mm/min and 20 mm test length.

### 3.3. Tensile strength, elongation at break

Tensile strength at yield is measured according to ISO 1184.

### 4. Stress induced electrochemical degradation (SIED)

SIED is measured in accordance with the method described in K. Steinfeld et al., "Stress induced electrochemical degradation of the inner semicon layer", IEEE Transactions on Dielectrics and Electrical Insulation, vol. 5, no. 5, 1998.

The samples used are sandwich-type slabs consisting of conductor wires with a radius of 1.5 mm, semiconductive layer and insulation. The wires are taken from the aluminum conductor of a medium voltage cable, the insulation layer is formed of LDPE (MFR₂=2 g/10 min) containing 2 wt% of dicumylperoxide and 0.2 wt% 4,4'-thiobis(2-tert.-butyl-5-methylphenol), and the semiconductive layer is formed of the semiconductive composition to be tested. The samples are produced by means of a heatable laboratory press equipped with appropriate ring-shaped molds.

The thickness of the semiconductive layer in the sandwich-type slab is 1 mm, which is to be measured as the shortest distance of the wires to the insulation layer.

During the manufacture of the samples, precautions must be taken against the occurence of contaminant particles and granule boundaries in the insulation which may lead to water treeing. By working in an extra clean environment and appropriate handling of both the raw materials and the semifinished products, contamination of the insulation and the interface to the semiconducting layers must be limited to a negligible degree. Granule boundaries can be avoided by choosing manufacturing parameters which result in an intensive flow of material in the mold. The measures must result in samples in which apart from vented trees initiated by SIED hardly any additional water treeing can be observed.

The samples are conditioned at 70 °C for 120 h to remove crosslinking byproducts. The samples are then heated to 130°C and quenched with tap water from the insulation side.

The samples are mounted into an ageing cell, such as described in Fig. 2 of K. Steinfeld et al., "Stress induced electrochemical degradation of the inner semicon layer", IEEE Transactions on Dielectrics and Electrical Insulation, vol. 5, no. 5, 1998, on page 775. The sample is permanently deformed from the conductor side resulting in a bend and thus having mechanical strain on semicon and insulation of the sample during ageing. The liquid tank on the insulation side contained demineralized water. On the conductor side, a sodium chloride solution containing a small amount of surfactant is used. Both liquids can be heated and cooled enabling temperature cycling.

The ageing conditions to be applied are the following:

| | |
|---|---|
| Test duration: | 1000 h |
| Electrical field strength: | 5 kV/mm (50 Hz, rms) |
| Temperature: | isothermal, 50°C |
| Electrolyte: | aqueous NaCl solution, 0.1 mol/1, 0.01 % surfactant |
| Strain (elongation): | 4 % |

After ageing, the different model samples were cut into two halves, the aluminum wires were removed and one half stained in a methylene blue dye solution. Following the staining procedure, 20 slices of 500 micrometers were microtomed perpendicular to the slab surface and microscopically observed for structures in the semiconductive layer and possible vented trees in the insulation initiated by these structures. The defect structures in the semiconductive layer were then counted in the direction parallel to the semiconductive layer. The results were reported as number of structures with and without vented trees per mm.

### 5. Melt flow rate

The melt flow rate is determined according to ISO 1133. The MFR is measured with a load of 2.16 kg at 190°C for polyethylene.

### Compositions used in the examples

### Example 1 (inventive composition):

- 39 wt% furnace carbon black
- 60.4 wt% of poly(ethylene butylacrylate) with 4.3 mol% butylacrylate monomer units, MFR_{2/190} (measured at a temperature of 190°C and a load of 2.16 kg in accordance with ISO 1133) of 7 g/10minutes
- 0.3 wt% phthalic acid anhydride
- 0.3 wt% of a diphenyl sulfide antioxidant TBM, 4,4'-Thiobis (2-tert. butyl-5-methylphenol)

1% of a di(tert.-butylperoxy)di-isopropylbenzene (CAS no 25155-25-3) has been added to the above polymer compound.

### Example 2 (inventive composition):

- 39 wt% furnace carbon black
- 60.55 wt% of an ethylene/butyl acrylate copolymer
- 0.15 wt% phthalic acid anhydride
- 0.3 wt% of a diphenyl sulfide antioxidant, 4,4'-Thiobis (2-tert. butyl-5-methylphenol)

1.2% of a di(tert.-butylperoxy)di-isopropylbenzene (CAS no 25155-25-3) has been added to the above polymer compound.

### Example 3 (inventive composition):

- 37.5 wt% furnace carbon black
- 62 wt% of poly(ethylene butylacrylate) with 4.3 mol% butylacrylate monomer units, MFR_{2,190} (measured at a temperature of 190°C and a load of 2.16 kg in accordance with ISO 1133) of 7 g/10minutes, 0.25 wt% Itaconic anhydride
- 0.25 wt% of a diphenyl sulfide antioxidant TBM, 4,4'-Thiobis (2-tert. butyl-5-methylphenol)

1.3% of a di(tert.-butylperoxy)di-isopropylbenzene has been added to the above polymer compound.

### Example 4 (inventive composition):

- 37.5 wt% furnace carbon black
- 62 wt% of poly(ethylene butylacrylate) with 4.3 mol% butylacrylate monomer units, MFR_{2,190} (measured at a temperature of 190°C and a load of 2.16 kg in accordance with ISO 1133) of 7 g/10minutes
- 0.25 wt% THFSA (Tetra hydro phtalic acid anhydride)
- 0.25 wt% of a diphenyl sulfide antioxidant TBM, 4,4'-Thiobis (2-tert. butyl-5-methylphenol) (CAS-no. 96-69-5)

1.3% of a di(tert.-butylperoxy)di-isopropylbenzene (CAS no 25155-25-3) has been added to the above polymer compound.

### Example 5 (inventive composition):

- 39 wt% furnace carbon black
- 60.4 wt% of poly(ethylene butylacrylate) with 4.3 mol% butylacrylate monomer units, MFR_{2,190} (measured at a temperature of 190°C and a load of 2.16 kg in accordance with ISO 1133) of 7 g/10minutes
- 0.3 wt% lasar Alkenyl succinic anhydride
- 0.3 wt% of a diphenyl sulfide antioxidant TBM, 4,4'-Thiobis (2-tert. butyl-5-methylphenol)

1.3% of a di(tert.-butylperoxy)di-isopropylbenzene has been added to the above polymer compound.

### Example 6 (inventive composition):

- 39 wt% furnace carbon black
- 60.7 wt% of poly(ethylene butylacrylate) with 4.3 mol% butylacrylate monomer units, MFR_{2,190} (measured at a temperature of 190°C and a load of 2.16 kg in accordance with ISO 1133) of 7 g/10minutes
- 0.15 wt% phthalic acid anhydride
- 0.15 wt% "Naugard 445" (4,4'-bis(1,1'-dimethylbenzyl)diphenylamine) 1.2% of a di(tert.-butylperoxy)di-isopropylbenzene has been added to the above polymer compound.

### Comparative Example 1 (comparative composition):

- 39 wt% furnace carbon black
- 60.3 wt% of an ethylene/butyl acrylate copolymer
- 0.7 wt% poly-2,2,4-trimethyl-1,2-dihydroquinoline (TMQ) as an antioxidant

1 % of a di(tert.-butylperoxy)di-isopropylbenzene has been added to the above polymer compound,

### Comparative Example 2 (Comparative composition):

- 39 wt% furnace carbon black
- 60.55 wt% of an ethylene/butyl acrylate copolymer
- 0.35 wt% MD1024, 2',3-bis[3-(3,5-di-tert-butyl-4-hydroxyphenyl)propionyl] propionohydrazide (Cas no 32687-78-8)
- 0.25 wt% of a diphenyl sulfide antioxidant, 4,4'-Thiobis (2-tert. butyl-5-methylphenol)

1% of a di(tert.-butylperoxy)di-isopropylbenzene (CAS no 25155-25-3) has been added to the above polymer compound.

### Comparative Example 3 (Comparative composition)::

- 39 wt% furnace carbon black
- 59.9 wt% of an ethylene/butyl acrylate copolymer
- wt% poly-2,2,4-trimethyl-1,2-dihydroquinoline (TMQ) as an antioxidant

1% of a di(tert.-butylperoxy)di-isopropylbenzene (CAS no 25155-25-3) has been added to the above polymer compound

### Results

In Table 1, the results of the Elastograph measurements are shown.

**Table 1: Elastograph measurements**

| | Ex 1 | Ex 2 | Comp 1 |
|---|---|---|---|
| Max. torque (Nm) | 1.33 | 1.34 | 1.32 |
| Time to reach 10% of max. torque (min) | 0.35 | 0.35 | 0.36 |
| Time to reach 90% of max. torque (min) | 5.19 | 5.13 | 6.01 |

The results clearly indicate that the inventive compositions comprising phthalic acid anhydride in combination with an antioxidant can be crosslinked at higher crosslinking speed. Thus, since a high crosslinking degree can be obtained within a shorter period of time, if compared with compositions having no phthalic acid anhydride, the amount of crosslinking agent could be reduced which has a beneficial effect on scorch performance.

In Table 2, the results of the rheometric scorch measurements are listed.

**Table 2: Rheometric Monsanto scorch testing at 140°C**

| | Ex 1 | Ex2 | Comp1 |
|---|---|---|---|
| Time to reach torque of 3 Nm (min) | 24.3 | 25.1 | 26.26 |
| Time to reach torque of 6 Nm (min) | 95.2 | 92 | 86.04 |

As already discussed above, the time to reach a certain torque value at typical extrusion temperatures should be as high as possible, indicating a low tendency for premature crosslinking in the extruder. Considering the results of Table 2, it is evident that the inventive compositions have a higher resistance to the formation of scorch.

In Table 3, the ageing results with regard to polymers in contact with copper are shown. Thus, the results of Table 3 are relevant for the assessment of metal-activated ageing.

**Table 3: Ageing at 135°C in the presence of copper**

| | Ex1 | Ex2 | Ex3 | Ex4 | Ex5 | Ex6 | Comp 1 |
|---|---|---|---|---|---|---|---|
| Initial tensile strength (MPa) | 20.02 | 21.42 | 25 | 24 | 19,0 | 20,6 | 21.32 |
| Initial elongation at break (%) | 206 | 185 | 239 | 223 | 232 | 171,4 | 243.2 |
| Tensile strength, 10 d ageing, 135°C (MPa) | | 19.09 | 21 | 22 | 19,0 | 18,0 | 17.15 |
| Elong. at break, 10 d ageing, 135°C (%) | | 168.1 | 218 | 217 | 195 | 158,7 | 154.1 |
| Tensile strength, 14 d ageing, 135°C (MPa) | 18.16 | 18.4 | | | | | |
| Elong. at break, 14 d ageing, 135°C (%) | 182.9 | 147.9 | | | | | |
| Tensile strength, 20 d ageing, 135°C (MPa) | | 17.96 | | | | | |
| Elong. at break, 20 d ageing, 135°C (%) | | 134.1 | | | | | |
| Tensile strength, 21 d ageing, 135°C (MPa) | 17.64 | | 21 | 21 | 19 | | |
| Elong. at break, 21 d ageing, 135°C (%) | 159.4 | | 182 | 187 | 162 | | |

For the assessment of ageing properties, the relative change of mechanical properties such as tensile strength or elongation at break as a function of ageing time is relevant. Comp1 shows a decrease in elongation at break after ageing for 10 days of 37% whereas Ex1 and Ex2 show a decrease in elongation at break well below 30 % (Ex1: 22 %, Ex2: 27 %)after ageing for 20/21 days. Thus, the results clearly demonstrate that the inventive examples have a much lower decrease in elongation at break and tensile strength, indicating an improvement in metal-activated ageing.

In Table 4, the ageing results with regard to polymers having no contact with metallic materials are shown. Thus, the results of Table 4 are relevant for the assessment of "ordinary" thermal ageing.

**Table 4: Ageing at 135°C without copper contact**

| | Ex1, 1.1 % peroxide added | Comp1 |
|---|---|---|
| Initial tensile strength (MPa) | 20.52 | 20.86 |
| Initial elongation at break (%) | 211.4 | 220.9 |
| Tensile strength, 14 d ageing, 135°C (MPa) | 19.27 | 17,72 |
| Elong. at break, 14 d ageing, 135°C (%) | 195.6 | 160.6 |
| Tensile strength, 21 d ageing, 135°C (MPa) | 20.02 | 17.22 |
| Elong. at break, 21 d ageing, 135°C (%) | 204.9 | 152.1 |

The results demonstrate that the inventive composition has a high resistance to thermal ageing.

In Table 5, the number of SIED structures for different compositions are given. The SIED structures within the semiconductive layer are classified into those already having initiated water-trees in the insulating layer and those not yet having initiated water-trees. The results of Table 5 are relevant for the assessment ageing resulting from stress induced electrochemical degradation.

**Table 5: Analysis of SIED structures**

| | | | |
|---|---|---|---|
| | Number of structures with initiated vented tree [no/mm] | Number of structures without initiated vented tree [no/mm] | Total Number of structures [no/mm] |
| Ex 1 | 3 | 18 | 21 |
| Comp 1 | 13 | 32 | 45 |
| Comp 2 | 3.5 | 26.5 | 30 |
| Comp 3 | 6.5 | 46 | 52.5 |

Thus, from the results of Tables 3-5, it is evident that the inventive compositions are successful in simultaneously improving (i) thermal ageing, (ii) metal-activated ageing (iii) stress induced electrochemical ageing, as well as (iv) scorch properties.

It is clear to a person skilled in the art that (i) thermal ageing, (ii) metal-activated ageing can be improved by increasing the amount of 1.1 wt% poly-2,2,4-trimethyl-1,2-dihydroquinoline (Comp 3). However, as shown in table 5, this would adversely effect the SIED properties.

Further, the (iv) scorch properties can be improved by reducing the peroxide content or adding commercially available scorch retarding additives. However, this would affect the crosslinking degree or add the complication of an addional additive, respectively.

Furthermore, comparative example 2 demonstrates that the above improvements require specifically a phthalic acid anhydride, since the same antioxidant with another commercially available co-stabilizer will adversely affect the SIED properties.

The inventive compositions are successful in simultaneously improving (i) thermal ageing, (ii) metal-activated ageing (iii) stress induced electrochemical ageing, as well as (iv) scorch properties without adversely affecting other properties.

## Claims

1. A polymer composition, comprising
- a polyolefin,
- a substituted or unsubstituted carboxylic acid anhydride and
- an antioxidant.

2. Polymer composition according to claim 1, wherein the substituted or unsubstituted carboxylic acid anhydride constitutes a ring including 3 to 7 carbon atoms and one oxygen.

3. Polymer composition according to any of the preceding claims claim, wherein the substituted or unsubstituted carboxylic acid anhydride constitutes a ring of 4 carbon atoms and one oxygen.

4. Polymer composition according to any of the preceding claims, wherein the substituted or unsubstituted carboxylic acid anhydride is a substituted or unsubstituted phthalic acid anhydride.

5. Polymer composition according to any of the preceding claims, wherein the polymer composition is semiconductive composition comprising carbon black.

6. Polymer composition according to any of the preceding claims, wherein the polyolefin is an ethylene homopolymer or a propylene homopolymer.

7. Polymer composition according to claims 1 to 5, wherein the polyolefin is an ethylene copolymer.

8. Polymer composition according to claim 7, wherein the comonomer is selected from propylene, C4-10 alpha-olefins, polar comonomers, or mixtures thereof.

9. Polymer composition according to claim 8, wherein the polar comonomer is selected from acrylic acid, methacrylic acid, acrylates, methacrylates, acetates, or mixtures thereof.

10. Polymer composition according to any of the preceding claims, wherein the substituted or unsubstituted phthalic acid anhydride is present in an amount of 0,01 to 2 wt%, based on the weight of the polymer composition.

11. Polymer composition according to any of the preceding claims, wherein the phthalic acid anhydride is unsubstituted.

12. Polymer composition according to any of the preceding claims, wherein the antioxidant is present in an amount of 0.05 to 5 wt%, based on the weight of the polymer composition.

13. Polymer composition according to any of the preceding claims, wherein the antioxidant is selected from diphenyl sulfides, diphenyl amines, or mixtures therefrom.

14. Polymer composition according to claims 4 to 13, wherein an unsubstituted phthalic acid anhydride is used in combination with a diphenyl sulfide antioxidant.

15. Polymer composition according to claims 5 to 14, comprising 10 to 45 wt% carbon black, based on the weight of the semiconductive polymer composition.

16. Polymer composition according to any of the preceding claims, wherein the polyolefin is crosslinked.

17. Polymer composition according to any of the preceding claims, wherein the polyolefin is crosslinkable.

18. Polymer composition according to any of the preceding claims, wherein the composition further comprises a crosslinking agent preferably peroxide.

19. Use of polymer composition according to claims 1 to 18 for the preparation of a layer used in a cable.

20. Use of polymer composition according to claim 19, wherein the layer is used in power cable or a communication cable.

21. Use of polymer composition according to claims 19 or 20, wherein the layer is a inner semiconductive layer surrounding the metallic conductor.

22. A layered device, comprising at least one semiconductive layer which comprises the semiconductive polymer composition according to claims 5 to 18, wherein the semiconductive layer is adjacent to a metallic material.

23. Layered device according to claim 22, wherein the device is an electric power cable comprising a metallic conductor which is surrounded by the semiconductive layer.

24. Use of substituted or unsubstituted phthalic acid anhydride as a metal deactivator in a cable made of a composition comprising
- a polyolefin,
- a substituted or unsubstituted phthalic acid anhydride,
- an antioxidant

25. An insulating polymer composition, comprising
- a polyolefin,
- substituted or unsubstituted diphenyl sulfide as an antioxidant, and
- a substituted or unsubstituted phthalic acid anhydride.

26. A layered device, comprising at least one insulating layer which comprises the insulating polymer composition according to claim 25.

27. Layered device according to claim 26, the device being an electric power cable.
